(19) Europäisches Patentamt
European Patent Office
Office européen des brevets

(11) **EP 2 619 900 B1**

(12) **EUROPÄISCHE PATENTSCHRIFT**

(45) Veröffentlichungstag und Bekanntmachung des Hinweises auf die Patenterteilung:
**06.05.2020 Patentblatt 2020/19**

(21) Anmeldenummer: **10757602.7**

(22) Anmeldetag: **24.09.2010**

(51) Int Cl.:
*H02P 21/00* (2016.01)          *H02P 23/26* (2016.01)
*H02P 27/06* (2006.01)

(86) Internationale Anmeldenummer:
**PCT/EP2010/064177**

(87) Internationale Veröffentlichungsnummer:
**WO 2012/037983 (29.03.2012 Gazette 2012/13)**

(54) **VERFAHREN ZUR (KUPFER-)VERLUSTOPTIMALEN REGELUNG EINER ASYNCHRONMASCHINE MIT EINEM UMRICHTER**

METHOD FOR CONTROLLING AN ASYNCHRONOUS MACHINE HAVING A CONVERTER IN A MANNER THAT IS OPTIMAL FOR (COPPER) LOSS

PROCÉDÉ DE RÉGULATION OPTIMISÉE EN TERMES DE PERTES (DANS LE CUIVRE) POUR UN MOTEUR ASYNCHRONE AU MOYEN D'UN CONVERTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**31.07.2013 Patentblatt 2013/31**

(73) Patentinhaber: **Lenze Drives GmbH**
**32699 Extertal (DE)**

(72) Erfinder:
• **STICHWEH, Heiko**
  **31832 Springe (DE)**
• **EINHAUS, Albert**
  **49681 Garrel (DE)**
• **WISGICKL, Matthias**
  **92242 Hirschau (DE)**

(74) Vertreter: **Leonhard, Frank Reimund et al**
**Leonhard & Partner**
**Patentanwälte**
**Postfach 10 09 62**
**80083 München (DE)**

(56) Entgegenhaltungen:
**WO-A1-87/06403          DE-A1-102006 056 902**
**US-A1- 2004 135 533**

• **JAE HO CHANG ET AL: "Minimum-Time Minimum-Loss Speed Control of Induction Motors Under Field-Oriented Control", IEEE TRANSACTIONS ON INDUSTRIAL ELECTRONICS, IEEE SERVICE CENTER, PISCATAWAY, NJ, USA, Bd. 44, Nr. 6, 1. Dezember 1997 (1997-12-01), XP011023315, ISSN: 0278-0046 in der Anmeldung erwähnt**

## Beschreibung

Die im Rahmen dieser Anmeldung offenbarte Verfahrenserfindung erreicht eine last- und drehzahlabhängige Optimierung des Wirkungsgrads einer umrichter-gespeisten Asynchronmaschine.

Das Verfahren findet Verwendung bei Asynchronmaschinen, die nicht mit einer feldorientierten Regelung, sondern mit einer kennlinien-basierten Steuerung oder Regelung betrieben werden. Von dem Verfahren wird der Fluss der Maschine an die aktuelle Last und Drehzahl bzw. Drehfeldfrequenz so angepasst, dass die im Kupfer auftretenden Verluste im Stator und Rotor, welche den größten Anteil an den Gesamtverlusten der Asynchronmaschine ausmachen, für den stationären Betriebszustand herabgesetzt, insbesondere sogar minimiert werden.

Die heute gängigen elektrischen Antriebssysteme bestehend aus einem Frequenz- oder Servo-Umrichter und einer Asynchronmaschine werden im Allgemeinen über eine kennlinien-basierte oder eine feldorientierte Steuerung bzw. Regelung betrieben. In beiden Fällen wird versucht, den Fluss der Maschine im Spannungs-Stellbereich konstant auf seine Bemessungsgröße einzustellen, vgl. Quang und Dittrich in "Praxis der feldorientierten Drehstromantriebsregelungen", 2. Auflage 1999 Expert Verlag. Dies ermöglicht ein dynamisches Verhalten bei Last- oder bei gewünschten Drehzahländerungen sowie eine gute Kippstabilität der Asynchronmaschine. Nachteilig ist bei einer derartigen Lösung, dass insbesondere im Teillastbereich zwischen 0% und ca. 50% des Nennmoments der konstant gehaltene Fluss größer ist, als dies aus energetischer Sicht für einen stabilen Betrieb notwendig ist. Durch eine gezielte Flussabsenkung kann im Teillastbereich eine Reduzierung des Ständerstroms der Asynchronmaschine erzielt und damit eine Wirkungsgradoptimierung erreicht werden. Eine derartige Funktion ist für viele Anwendungen, bei denen nur eine geringe Dynamik erforderlich ist und die über längere Zeiträume im Teillastbereich betrieben werden, wünschenswert. Beispielhaft können hier Anwendungen im Bereich der Lüfter- und Pumpentechnik oder im Bereich der Fördertechnik genannt werden.

Zur Minimierung der Verluste einer Asynchronmaschine sind mehrere unterschiedliche Verfahren aus verschiedenen Publikationen bekannt. Allgemein können diese in modell-basierende Lösungsansätze und algorithmen-basierte Lösungsansätze, welche nach einem effizienten Betriebspunkt suchen, unterteilt werden. Die modell-basierenden Lösungsansätze setzen hierbei im Allgemeinen auf das feldorientierte Modell der Asynchronmaschine auf.

Ein großer Teil der Publikationen befasst sich mit unterschiedlichen Varianten der sogenannten cos $\varphi$ Regelung. Bei diesem Verfahren wird über die Regelung des cos $\varphi$ (als 'Leistungsfaktor' bekannt) der Wirkungsgrad der Maschine optimiert.

EP 330 477 A2 verdeutlicht ein Verfahren, welches anhand der Phasenspannungen $U_u$, $U_v$ und $U_W$ sowie der gemessenen Phasenströme $I_u$, $I_v$ und $I_w$ den Spannungs- bzw. Stromzeiger berechnet und anschließend den Differenzwinkel zwischen den Zeigern bzw. den cos $phi_{ist}$ (gleichermaßen als cos $\varphi_{ist}$) ermittelt. In der Motorsteuerung ist hierbei eine Tabelle zugeordnet, welche jedem cos $phi_{ist}$ eine eigene U/f-Kennlinie zuordnet. Die Kennlinien sind hierfür motorspezifisch mit jeweils konstantem Lastmoment über einen gewissen Drehzahlbereich im Vorfeld zu ermitteln. Der cos $phi_{ist}$ weist in diesem Verfahren somit auf das anliegende Lastmoment hin. Nachteilig bei diesem Verfahren ist der hohe Aufwand, der mit der notwendigen Kennlinienmessung einhergeht.

Eine alternatives cos $\varphi$ Regelungskonzept ist mit einer Reihe von Schriften, so EP 556 013 B1, US 5,442,271 **und** US 5,500,581 eingeführt worden. Der Leistungsfaktor cos $phi_{ist}$ wird hier mit Hilfe des Quotienten aus Wirkleistung P und Scheinleistung S gebildet. Zur Berechnung der Leistungen werden ebenfalls die Phasenspannungen und -ströme verwendet. Bei diesem Verfahren wird in Abhängigkeit der Motorspannung und der Solldrehzahl ein Kompensationswert ermittelt, der vom Leistungsfaktor cos $\varphi_{ist}$ abgezogen wird. Das Ergebnis wird mit einem für den optimalen Betriebspunkt ermittelten Faktor multipliziert und als Spannung von der auszugebenden Motorspannung abgezogen. Auf diese Weise wird indirekt der Fluss last- und drehzahlabhängig derartig minimiert, dass sich ein guter Wirkungsgrad an der Asynchronmaschine einstellt. Die Ermittlung des Kompensationswerts erfolgt anhand von Kurvenscharen, die motorspezifisch im Vorfeld aufzunehmen sind.

Ein wesentliches Merkmal der bisher genannten Verfahren ist es, dass im Vorfeld der Anwendung der Verfahren eine motorspezifische, messtechnische Ermittlung der Kennlinien bzw. der Kompensationskurvenscharen notwendig ist. Aufgrund des dadurch resultierenden Aufwands wird eine allgemeine Serienanwendung deutlich erschwert.

Aus der Literatur ist ein weiterer algorithmen-basierter Ansatz bekannt, vgl. Kirschen, Novotny, Lipo in "On-Line Efficiency Optimization of a Variable Motor Drive", IEEE Trans. Industry Appl., Vol. 21, Nr. 4, Mai/Juni 1985 Seiten 610 bis 615. Dort wird ein Such-Algorithmus vorgeschlagen, der den optimalen Rotorfluss zu jedem Betriebspunkt einer Asynchronmaschine finden soll. Bei diesem iterativen Verfahren wird in festgelegten Zeitintervallen der Rotorfluss reduziert. Nach jeder Reduzierung wird nach einer gewissen Einschwingzeit die Wirkleistungsänderung analysiert. Unterschreitet die Wirkleistungsänderung eine definierte Schwelle, so ist gemäß Algorithmus das verlustoptimale Minimum nahezu gefunden. In diesem Falle wird die Schrittweite der Rotor-Flussänderung halbiert und der Fluss erhöht. Überschreitet die Wirkleistungsänderung wieder die definierte Schwelle, wird wieder der Rotorfluss reduziert. Durch die zyklische Anpassung des Flusses in positiver und negativer Richtung kann das Verfahren auch bei sich ändernden Lasten einen stabilen und verlustoptimierten Arbeitspunkt ermitteln. Nachteilig ist, dass bei dynamischen Änderungen das Verfahren nur eingeschränkt arbeiten kann. Weiterhin ist aufgrund der permanenten Anpassung des Flusses eine leichte Drehmomenten-Schwingung auf der Abtriebswelle der Asynchronmaschine feststellbar. Ein Vorteil der Verfahren ist, dass keine Kenntnisse über die Parameter des Motors notwendig sind.

Abweichend von den bisher beschriebenen algorithmen-basierten Ansätzen sind auch modell-basierende Ansätze bekannt. In DE 196 15 095 C1 wird eine Verlustminimierung dargestellt, die bei feldorientiert geregelten Asynchronmaschinen eine Anwendung findet. Hierbei wird der Flusssollwert aus dem Verhältnis des Flusswertes am Nennpunkt zum Nennmoment bestimmt. Diese Kennzahl wird noch mit dem gewünschten Sollmoment multipliziert. Somit erhält man einen Sollfluss, der mit dem Sollmoment im selben Verhältnis steht, wie jenes, das am Nennbetriebspunkt herrscht. Alternativ zum Sollmoment kann auch das berechnete Istmoment verwendet werden.

$$\psi'_{rd,Soll} = \frac{\psi'_{rd,N}}{m_N} m_{Soll} \tag{1}$$

Mit dem genannten Verfahren wird der Fluss last-proportional im Teillastbereich abgesenkt. Zur Verwendung des Verfahrens ist eine feldorientiert arbeitende Regelung notwendig.

In der Literatur sind weitere Ansätze zu finden, mit denen eine wirkungsgrad-optimierte Regelung ermöglicht wird, vgl. Abrahamsen in "Energy Optimal Control of Induction Motor Drives", Institute of Energy Technology, Alborg University, Thesis Februar 2000. Zusätzlich zu den bereits erläuterten Energie-Optimierungsansätzen werden dort noch weitere Varianten angeführt. Eine dieser Varianten sieht eine Addition eines Spannungskorrekturwerts in Abhängigkeit der ermittelten Schlupffrequenz vor. Des Weiteren werden mehrere Lösungsansätze unter dem Sammelbegriff "Modell basierende Optimierungsansätze" zusammengefasst. Dazu gehört unter anderem ein Vorschlag, bei dem der für die jeweils anliegende Last eine optimale Ständerfrequenz $f_s$ mit Hilfe eines Modells berechnet werden soll. Ein anderer Vorschlag sieht vor, ebenfalls mittels eines Modells abhängig von der aktuellen Motorbelastung eine optimierte Spannung $u_s$ zu berechnen.

Chang und Kim in "Minimum-Time Minimum-Loss Speed Control of Induction Motors under Field-Oriented Control", IEEE Trans. Industrial Electronics, Vol. 44, Nr. 6, Dez. 1997 Seiten 809 bis 815, schlägt ein modellbasiertes Verfahren vor, welches gezielt Kupferverluste im Motor reduziert. Da die in dieser Quelle dargestellte Theorie für die hier vorgeschlagene Erfindung von zu beachtender Bedeutung ist, wird dieser bekannte Ansatz näher ausgeführt. Grundsätzlich wird hierbei der Versuch unternommen, das Kupferverlustminimum eines feldorientiert geregelten Systems in Abhängigkeit des Rotorflusses sowie des Lastmomentes für den stationären Betriebsfall zu ermitteln. Hierfür werden die einzelnen Kupferverluste, die im Stator und im Rotor anfallen,

$$P_{Cu,s} = R_s i_s^2 \tag{2}$$

$$P_{Cu,r} = R_r i_r^2 \tag{3}$$

als Summe betrachtet. Nach einer Zerlegung der Ströme in zwei orthogonale Anteile (als d,q-Anteile) erhält man für die gesamten Kupferverluste folgende Gleichung

$$P_{Cu} = R_s (i_{sd}^2 + i_{sq}^2) + R_r (i_{rd}^2 + i_{rq}^2) \tag{4}$$

Wird die d-Abszisse des Rotor-Koordinatensystems auf dem Vektor des Rotorflusses $\psi_r$ gelegt, so erhält man im eingeschwungenen Zustand für die Stromkomponenten die folgenden Ausdrücke:

$$i_{sd} = \frac{\psi_{rd}}{L_h} \tag{5}$$

$$i_{sq} = \frac{2}{3} \frac{m_M L_r}{z_p \psi_{rd} L_h} \tag{6}$$

$$i_{rd} = 0 \tag{7}$$

$$i_{rq} = -\frac{2}{3}\frac{m_M}{z_p \psi_{rd}} \qquad (8)$$

Setzt man Gleichung (5 bis 8) in die Gleichung (4) ein und führt weiterhin

$$\psi'_{rd} = \frac{\psi_{rd}}{L_h} \qquad (9)$$

ein, so können die Kupferverluste wie folgt in Abhängigkeit des Rotorflusses und des Lastmomentes beschrieben werden:

$$P_{Cu} = R_s \psi'^2_{rd} + \frac{4}{9}\frac{L_r^2 R_s + L_h^2 R_r}{L_h^4 z_p^2}\frac{m_M^2}{\psi'^2_{rd}} \qquad (10)$$

Leitet man die Kupferverluste (10) nach dem Fluss $\psi'_{rd}$ ab und setzt die Ableitung zu Null (Nullstelle der Steigung), so lässt sich zu jedem Lastmoment ein Fluss berechnen, bei dem die Kupferverluste $P_{Cu}$ minimal sind.

$$\psi'_{rd,opt} = \frac{1}{L_h} \cdot \sqrt[4]{\frac{L_r^2 R_s + L_h^2 R_r}{R_s}}\sqrt{\frac{2}{3}\frac{1}{z_p}} \cdot \sqrt{m_M} \qquad (11)$$

Die Gleichung belegt, dass zu jedem Lastmoment ein Rotorflusssollwert ermittelt werden kann, mit dem die Kupferverluste minimiert werden können. Dieser Lösungsweg ermöglicht somit eine verlustoptimale Regelung bei feldorientiert geregelten Systemen. Anzumerken ist hierbei, dass der optimale Rotorfluss bei steigenden Lastmomenten auch Größenordnungen annehmen kann, welche aufgrund der Sättigung nicht angefahren oder erreicht werden können und damit über dem Bemessungsfluss liegen. Der Rotorfluss ist daher auf einen sinnvollen Maximalwert, z.B. den Bemessungsfluss zu begrenzen.

Ein Großteil der genannten Veröffentlichungen setzt entweder einen feldorientiert geregelten Antrieb oder eine mit einem erheblichen Aufwand verbundene motorspezifische Messung von Kennlinien oder Korrekturwerten oder einen iterative Flussanpassung mit begrenzter Dynamik voraus. Ferner weisen viele Verfahren den Nachteil auf, dass eine nachweisbar optimale Verlustminimierung nicht in jedem Falle möglich ist. Eine Ausnahme bildet hierbei das letztgenannte Verfahren von Chang, Kim, wo eine exakte Herleitung eines kupferverlustoptimalen lastabhängigen Rotorflusses zu finden ist.

Die Vorrichtung aus WO 1987/06403 A1 steuert eine Amplitude der vom Wechselrichter gelieferten Spannung so, dass der Istwert der Phasendifferenz zwischen Motorspannung und Motorstrom dem Sollwert der Phasendifferenz bei der betreffenden Frequenz entspricht. Auf diese Weise erhält man automatisch den richtigen Magnetisierungsstrom im Motor, unabhängig von Drehzahl und Last. Wird die Last oder die Drehzahl geändert, passt die Vorrichtung automatisch die Amplitude der Wechselspannung durch den Wechselrichter an, bis das Ausgangssignal des Vergleichers Null ist.

Die vorgeschlagene Erfindung soll eine auf einer Spannungs-Frequenz-Kennlinie basierende Steuerung bzw. Regelung ermöglichen, welche ohne eine Feldorientierung die Kupferverluste in der Asynchronmaschine reduziert und so - insbesondere im Teillastbereich - zu einer nennenswerten Wirkungsgradoptimierung beitragen. Das Verfahren soll darüber hinaus eine ausreichende Dynamik und Kippschutz bei begrenztdynamischen Vorgängen aufweisen. Bezüglich der Struktur soll eine cos φ Regelung verwendet werden, welche einen drehzahl- oder drehfeldfrequenzabhängig ermittelten Sollwert für cos phi nutzt, der deterministisch aus den Motorbemessungs- und Ersatzschaltbilddaten ermittelt wird. Über diesen Sollwert soll ein kupferverlustminimierter Betrieb erreicht werden. Darin sieht die beanspruchte Erfindung **ihre technische Aufgabe.**

Zur Lösung dieser Aufgabe wird auf Anspruch 1 verwiesen.

Im Folgenden wird die beanspruchte Erfindung (stützend) erläutert. Das Verfahren setzt auf die Berechnung des kupferverlustoptimalen Rotorflusses gemäß Gleichung (11) aus vorgenannter Quelle. Da bei einer kennlinienbasierten Steuerung oder Regelung einer Asynchronmaschine keine Feldorientierung vorliegt und demzufolge der Magnetisierungsstrom bzw. Rotorfluss $\psi'_{rd}$ opt nicht direkt auf seinen optimalen Wert geregelt werden kann, kann als Stellwert nur eine Anpassung der einzuprägenden Motorfrequenz oder der Motorspannung verwendet werden. Gemäß der Idee (der Erfindung) wird die Motorspannung so angepasst, dass sich ein kupferverlust-optimaler Fluss einstellt. Zur Anpassung der Motorspannung wird eine cos phi Regelung verwendet, die - im Gegensatz zu allen bekannten Verfahren - den drehzahl- oder drehfeldfrequenzabhängigen Sollwert der Regelung kupferverlustoptimal und deterministisch nur aus den Ersatzschaltbild- und Typenschilddaten der Asynchronmaschine ermittelt.

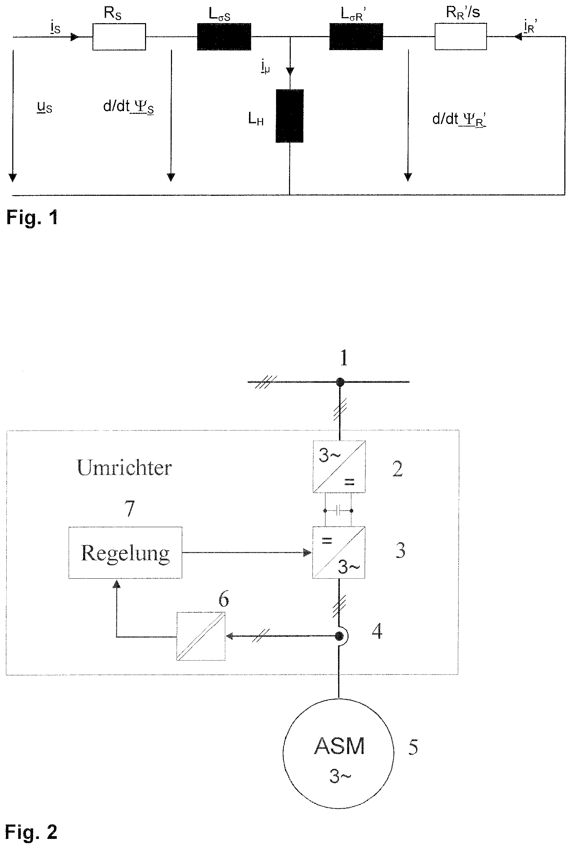

Für die Ermittlung des Sollwerts wird zunächst eine feldorientierte Betrachtung durchgeführt. Wie in Gleichung (11) gezeigt hängt der optimale Magnetisierungsstrom nur vom Lastmoment und den Ersatzschaltbilddaten der Asynchronmaschine ab, vgl. Figur 1. Geht man davon aus, dass die Ersatzschaltbilddaten der Asynchronmaschine sowie der Nennmagnetisierungsstrom bekannt sind,

$$i_{MR,Nenn} = \psi'_{rd,Nenn} \tag{12}$$

so kann gemäß Gleichung (11) das Drehmoment $m_{Opt,Eck}$ berechnet werden, welches bei dieser Magnetisierung kupferverlustoptimal der Maschine entnommen werden kann.

$$m_{Opt,Eck} = \frac{3}{2} i_{MR,Nenn}^2 L_h^2 z_p \sqrt{\frac{R_s}{L_r^2 R_s + L_h^2 R_r}} \tag{13}$$

Anhand dieses Drehmoments kann auf den feldorientierten Querstrom geschlossen werden, der zur Erzeugung des Drehmoments führt.

$$i_{sq,Opt,Eck} = \frac{2 L_r m_{Opt,Eck}}{3 L_h^2 z_p i_{MR,Nenn}} \tag{14}$$

$$i_{sd,Opt,Eck} = i_{MR,Nenn} \tag{15}$$

Anhand der bekannten orthogonalen Stromkomponenten können die dazugehörigen Spannungskomponenten ermittelt werden.

$$u_{sd,Opt,Eck} = \sigma L_s \left[ \left( \frac{1}{\sigma T_s} + \frac{1-\sigma}{\sigma T_r} \right) i_{sd,Opt,Eck} - \omega_s i_{sq,Opt,Eck} - \frac{1-\sigma}{\sigma T_r} \psi'_{rd,Nenn} \right] \tag{16}$$

$$u_{sq,Opt,Eck} = \sigma L_s \left[ \omega_s i_{sd,Opt,Eck} + \left( \frac{1}{\sigma T_s} + \frac{1-\sigma}{\sigma T_r} \right) i_{sq,Opt,Eck} + \frac{1-\sigma}{\sigma} \omega \psi'_{rd,Nenn} \right] \tag{17}$$

Durch Vereinfachung können die Spannungsgleichungen wie folgt abgebildet werden.

$$u_{sd,Opt,Eck} = \sigma L_s \left( \frac{1}{\sigma T_s} i_{MR,Nenn} - \omega_s i_{sq,Opt,Eck} \right) \tag{18}$$

$$u_{sq,Opt,Eck} = \sigma L_s \left[ \left( 1 + \frac{1-\sigma}{\sigma} \right) \omega_s i_{MR,Nenn} + \frac{1}{\sigma T_s} i_{sq,Opt,Eck} \right] \tag{19}$$

Den Gleichungen (18) und (19) kann entnommen werden, dass die Spannungen nur von den Strömen und der Ständerfrequenz abhängen. Aus den orthogonalen Strom- und Spannungsgleichungen können der Spannungs- und der Stromwinkel ermittelt werden.

$$\angle u_s = \varphi_U = \arctan\left(\frac{u_{sq,Opt,Eck}}{u_{sd,Opt,Eck}}\right) \qquad (20)$$

$$\angle i_s = \varphi_I = \arctan\left(\frac{i_{sq,Opt,Eck}}{i_{sd,Opt,Eck}}\right) \qquad (21)$$

Setzt man in die Gleichungen (20) und (21) die Gleichungen (18), (19), (13), (14) und (15) sowie (13) ein, so kann gezeigt werden, dass der Winkel des Stroms nur von den Ersatzschaltbilddaten des Motors und der Winkel der Spannung bei einer konstanten Drehfeldfrequenz ebenfalls für alle Magnetisierungsströme konstant ist.

$$\angle u_s = \varphi_U = \arctan\frac{\left[\left(1+\frac{1-\sigma}{\sigma}\right)\omega_s i_{MR,Nenn} + \frac{1}{\sigma T_s}L_r i_{MR,Nenn}\sqrt{\frac{R_s}{L_r^2 R_s + L_h^2 R_r}}\right]}{\left(\frac{1}{\sigma T_s}i_{MR,Nenn} - \omega_s L_r i_{MR,Nenn}\sqrt{\frac{R_s}{L_r^2 R_s + L_h^2 R_r}}\right)} \qquad (22)$$

$$\angle i_s = \varphi_I = \arctan\left(L_r\sqrt{\frac{R_s}{L_r^2 R_s + L_h^2 R_r}}\right) \qquad (23)$$

Gleichung (22) kann weiter vereinfacht werden, in dem der Nennmagnetisierungsstrom herausgekürzt wird. Fasst man alle nur parameterabhängigen Größen durch Konstanten $K_x$ zusammen, so ergeben sich für die Winkel folgende Gleichungen

$$\angle u_s = \varphi_U = \arctan\left(\frac{(K_2 \cdot K_3 + K_1\omega_s)}{(K_3 - K_2\omega_s)}\right) \qquad (24)$$

$$\angle i_s = \varphi_I = \arctan(K_2) \qquad (25)$$

mit

$$K_2 = L_r\sqrt{\frac{R_s}{L_r^2 R_s + L_h^2 R_r}} \qquad (26)$$

$$K_1 = \left(1+\frac{1-\sigma}{\sigma}\right) \qquad (27)$$

$$K_3 = \frac{1}{\sigma T_s} \qquad (28)$$

Hiermit kann gezeigt werden, dass der Strom- und Spannungswinkel für einen kupferverlustoptimalen Betrieb sowohl last- als auch flussunabhängig berechnet werden können. Lediglich der Spannungswinkel ist von der Drehfeldfrequenz abhängig.

Aus dieser Erkenntnis wird abgeleitet, dass der aus der Winkeldifferenz berechenbare cos φ bei einer konstanten

Drehfeldfrequenz konstant sein muss, wenn der Fluss kupferverlust-optimal geregelt werden soll.

$$\cos\varphi_{soll}(\omega_S) = \cos(\varphi_U(\omega_S) - \varphi_I) \tag{29}$$

Über diese Herleitung kann demzufolge ein cos phi für jede Drehfeldfrequenz ermittelt werden, welches - wenn man es über eine geeignete Regelungsstruktur einstellt - minimale Kupferverluste in der Asynchronmaschine und damit eine hohe Energieeffizienz auch bei kennliniengestützten Steuerungen oder Regelungen erreicht.

Die Erfindung sieht daher ein Regelsystem vor, welches über einen cos phi Regler drehfrequenzabhängig ein optimales cos phi einstellt. Die Sollwerte cos phi$_{Soll}$ der Regelung können bei bekannten Typenschild- und Ersatzschaltbilddaten der Maschine im Vorfeld berechnet und im Umrichter als Kennlinie hinterlegt werden.

Das beanspruchte Verfahren setzt keine Feldorientierung voraus und kann sowohl für beliebige Spannungs-Frequenz Kennliniensteuerung mit oder ohne Rückführung einer Drehzahl bzw. mit oder ohne Schlupfkompensation angewendet werden.

Prinzipiell ist eine Erweiterung aller bestehenden Kennliniensteuerungen um eine cos $\varphi_{Soll}$ Regelung möglich. Das ist die beanspruchte Leistungsfaktor-Regelung.

**Beispiele** erläutern die Erfindung und vertiefen ihr Verständnis.

Fig. 1: ist ein Ersatzschaltbild einer Asynchronmaschine;

Fig. 2: ist ein prinzipieller Aufbau eines Frequenz-Umrichters: Speisendes Netz 1, Gleichrichter 2, Wechselrichter 3, zwei- oder drei-phasige Stromerfassung 4, Asynchronmaschine 5, Messsignal-Aufbereitung 6 und gegebenenfalls eine Transformation, Regelung 7;

Fig. 3: zeigt eine prinzipielle Darstellung der Winkeldifferenz-Regelung;

Fig. 4: ist ein Vergleich des Wirkungsgrads einer bekannten U/f-Kennliniensteuerung mit einer U/f-Kennliniensteuerung gemäß einem Beispiel einer erfindungsgemäßen cos phi Regelung in Abhängigkeit des Lastmoments bei unterschiedlichen Solldrehzahlen bzw. Sollfrequenzen (Simulation an einem 750W Normmotor unter Vernachlässigung der Reib- und Eisenverluste);

Fig. 5: ist eine beispielhafte Darstellung von cos phi$_{Soll}$ in Abhängigkeit der Ausgangsfrequenz.

**Figur 2** zeigt in prinzipieller Weise eine Vorrichtung zur Verwirklichung eines Beispiels des erfindungsgemäßen Verfahrens. Darin wird über einen Gleichrichter 2 die Netzspannung 1 zu einer Gleichspannung gleichgerichtet, welche dem Wechselrichter 3 als Zwischenkreisspannung zugeführt wird. Der Asynchronmotor 5 ist mit den Ausgangsklemmen des Wechselrichters verbunden. Die Ansteuerung der Ventile des Wechselrichters erfolgt über eine Steuerschaltung. Es werden mindestens zwei der drei Motorphasenströme erfasst (bei 4 sowie 6) und dem Regelsystem 7 zugeführt.

Innerhalb des Regelsystems wird aus den erfassten Motorströmen der Ständerstromvektor bestimmt. Der Ständerspannungsvektor kann messtechnisch über eine Messung der Spannung an den Ausgangsklemmen des Wechselrichters ermittelt oder aus der erfassten Zwischenkreisspannung und dem Schaltzustand des Wechselrichters rekonstruiert werden. Ferner kann die Zwischenkreisspannung messtechnisch erfasst oder geschätzt werden.

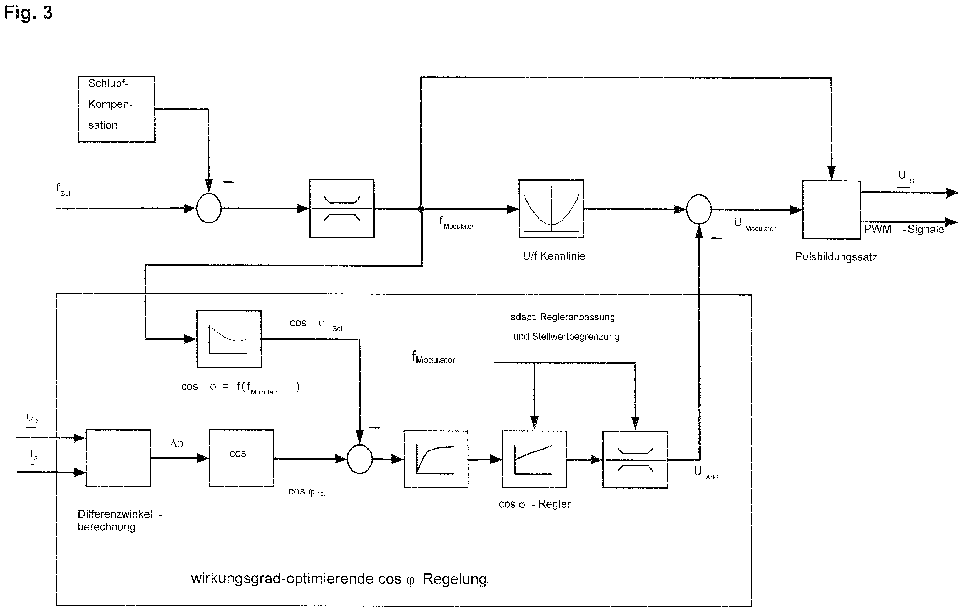

Ein Teil des Regelsystems ist in der Figur 3 dargestellt. Die Struktur baut auf einer beliebig ausgeführten Spannungs-Frequenz-Kennliniensteuerung auf. Diese wird um den wirkungsgradoptimierenden cos phi Regler erweitert. Anhand der Ausgangs- bzw. Drehfeldfrequenz f$_{Modulator}$, die entweder direkt aus der Sollfrequenz bzw. Solldrehzahl gewonnen wird oder z.B. über eine Schlupfkompensation, einen Maximalstromregler oder einer Drehzahlregelung angepasst werden kann, wird über eine Kennlinie ein Sollwert cos phi$_{Soll}$ der cos phi Regelung ermittelt.

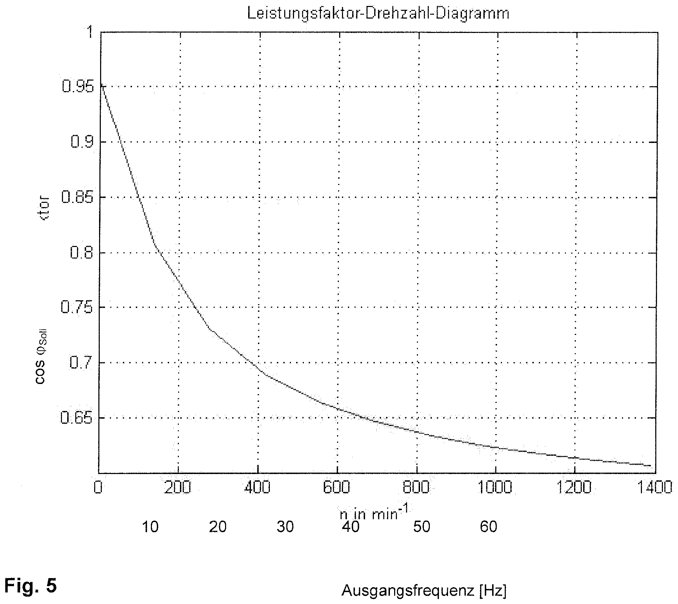

In der Figur 5 ist beispielhaft eine derartige Kennlinie dargestellt.

Der Istwert der cos phi Regelung kann, z.B. aus der Winkeldifferenz zwischen dem Spannungsvektor und dem Stromvektor ermittelt werden. Eine andere Möglichkeit besteht darin, den cos phi$_{ist}$ anhand der Wirk- und Scheinleistung oder anhand des gemessenen DC-Zwischenkreisstroms zu ermitteln. Über einen Regler, der z.B. als PI-Regler ausgeführt sein kann, wird eine Spannung U$_{Add}$ ermittelt, mit der anschließend die Ausgangsspannung U$_{Modulator}$ des Umrichters beeinflusst wird. Um eine Übermagnetisierung des Motors zu vermeiden, wird am Ausgang der cos phi Regelung eine Begrenzung empfohlen, die eine Erhöhung der Ausgangsspannung U$_{Modulator}$ durch eine Begrenzung von U$_{Add}$ auf ausschließlich positive Werte vermeidet. Ferner kann das regelungstechnische Verhalten verbessert werden, wenn die positive Begrenzung des Reglerausgangs U$_{Add}$ in Abhängigkeit der aktuellen Ausgangsfrequenz f$_{Modulator}$ angepasst wird.

Zur Verbesserung des Betriebsverhaltens ist weiterhin empfohlen, bei generatorischen Lasten die Eingangsdifferenz der cos phi Regelung auf Null zu setzen und so den für den motorischen Betrieb optimierten cos phi Regler am Eingriff zu hindern.

Ferner wird bei Verwendung einer PI-Reglerstruktur für den cos phi Regelung eine Anpassung der Proportionalverstärkung in Abhängigkeit der Drehfeldfrequenz empfohlen.

Die Ausgangsfrequenz $f_{Modulator}$ und die Ausgangsspannung $U_{Modulator}$ werden an den Pulsbildungssatz übergeben, welcher unter Kenntnis der Zwischenkreisspannung die Steuersignale für die Ventile der Endstufe ermittelt. Der Pulsbildungssatz kann entsprechend dem Stand der Technik ausgeführt werden, z.B. in einer Zweischalter-Modulation, Raumzeigermodulation oder Sinus-Dreieck-Modulation. Zur Optimierung des Verhaltens kann bei der Berechnung des Aussteuergrads kann die Wechselrichterfehlerkennlinie Berücksichtigung finden.

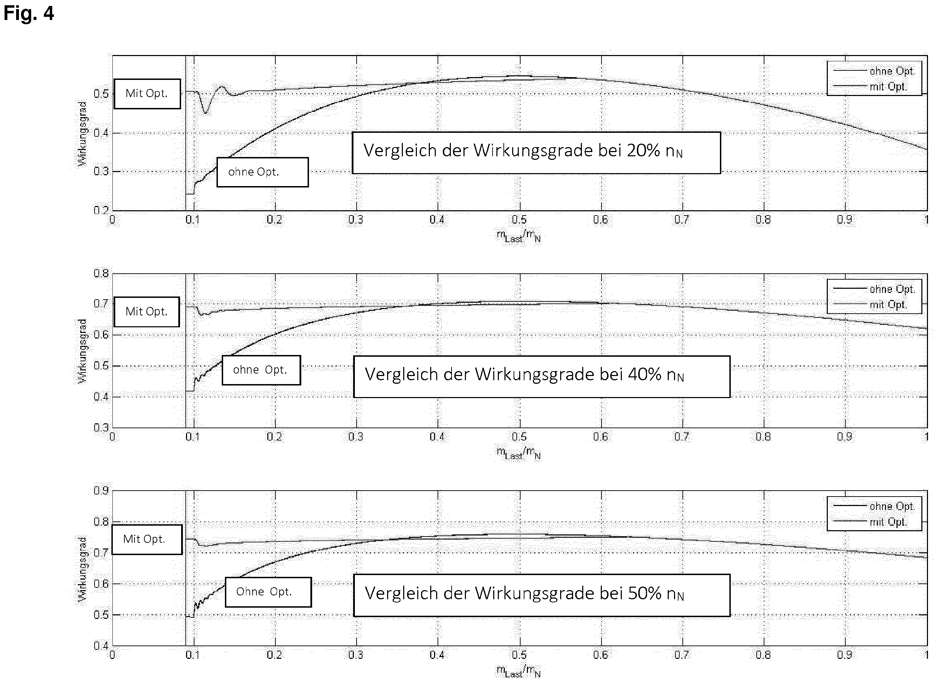

Der Effekt der Wirkungsgradverbesserung ist exemplarisch in den Abbildungen der Figur 4 dargestellt. Den Abbildungen bei 20% $n_N$, bei 40% $n_N$ und bei 50% $n_N$ ist zu entnehmen, dass insbesondere im Teillastbereich (0 ... 0,4 = $m_{Last}/m_{Nenn}$) durch die beschriebene cos $\varphi$ Regelung eine deutliche Wirkungsgradoptimierung (aufgetragen auf der Ordinate) erzielt werden kann.

## Patentansprüche

1. **Verfahren zur Beeinflussung** einer Asynchronmaschine, wobei die Asynchronmaschine von einem Steuergerät beeinflusst wird, mit den Schritten

   a. Vorgabe oder Einprägen eines mit einer Drehfeldfrequenz ($f_{Modulator}$) drehenden Spannungsvektors ($\underline{U}_S$) für die Maschine, wobei sowohl die Drehfeldfrequenz als auch der Spannungsvektor einer auf einer Spannungs-Frequenz-Kennlinie basierenden Steuerung oder Regelung ermittelt wurde, um den Spannungsvektor ($\underline{U}_S$) im Betrieb über eine Leistungsfaktor-Regelung als cos $\varphi$-Regelung mit einem Leistungsfaktor-Regler nachzuführen, **gekennzeichnet durch**:

      ba. Berechnung von Soll-Werten des Leistungsfaktors anhand zumindest elektrischer Daten der Asynchronmaschine;
      bb. Ermittlung von Istwerten des Leistungsfaktors (cos $\varphi_{Ist}$) unter Beteiligung von physikalischen Daten, welche den vorgegebenen oder eingeprägten Spannungsvektor ($\underline{U}_S$) und einen Stromvektor ($\underline{I}_S$) umfassen;
      bc. Bestimmen von Differenzen zwischen den Istwerten und Sollwerten des Leistungsfaktors (cos $\varphi_{Soll}$, cos $\varphi_{Ist}$) sowie Regeln auf den Leistungsfaktor mit diesen Differenzen als Eingangsgrößen;
      bd. Berechnen von Ausgangsgrößen des Leistungsfaktor-Reglers als Stellwerte ($U_{Add}$) für das Steuergerät;
      be. Begrenzung der Stellwerte ($U_{Add}$) und Anpassung des Spannungsvektors ($\underline{U}_S$) über die Stellwerte ($U_{Add}$);

   b. in einem verlustoptimierten Betrieb der Asynchronmaschine;
   c. wobei eine Reglerverstärkung des Reglers für den Leistungsfaktor in Abhängigkeit der Soll- oder Istdrehzahl oder in Abhängigkeit der Drehfeldfrequenz angepasst wird, oder die Regeldifferenz des Reglers für den Leistungsfaktor auf einen maximalen Wert in positiver und/oder negativer Richtung begrenzt wird;
   d. wobei zur Anpassung der Motorspannung die Regelung des Leistungsfaktors verwendet wird, die den drehzahl- oder drehfeldfrequenzabhängigen Sollwert der Regelung kupferverlustoptimal und deterministisch nur aus den elektrischen Daten der Asynchronmaschine ermittelt;
   e. wobei eine positive Begrenzung der Stellwerte ($U_{Add}$) am Reglerausgang in Abhängigkeit der aktuellen Ausgangsfrequenz angepasst wird.

2. Verfahren nach Anspruch 1, wobei mit oder ohne Drehzahlrückführung gearbeitet wird.

3. Verfahren nach Anspruch 1 oder 2, wobei der Ausgang des Reglers des Leistungsfaktors in Abhängigkeit der Soll- oder Istdrehzahl oder in Abhängigkeit der Drehfeldfrequenz begrenzt wird.

4. Verfahren nach einem der Ansprüche 1 bis 3, wobei sich bei einem generatorischen Betrieb die Steuerung oder Regelung des Leistungsfaktors abweichend vom motorischen Betrieb verhält.

5. Verfahren nach Anspruch 1, wobei das Steuergerät ein Umrichter oder ein Servo-Umrichter ist.

6. Verfahren nach Anspruch 1, wobei die Beeinflussung der Asynchronmaschine eine Steuerung oder eine Regelung ist.

7. Verfahren nach einem der vorigen Ansprüche, wobei die elektrischen Daten der Asynchronmaschine Typenschilddaten und/oder Ersatzschaltbilddaten sind.

**Claims**

1. **Method for influencing** an asynchronous machine, the asynchronous machine being influenced by a control device, having the steps

   a. Presetting or impressing a voltage vector ($U_S$) for the machine rotating at a rotating field frequency ($f_{Modulator}$), both the rotating field frequency and the voltage vector having been determined by a control or closed-loop control based on a voltage-frequency characteristic in order to track the voltage vector ($U_S$) during operation by means of a power factor control as cos $\varphi$ control with a power factor controller, **characterized by**

      ba. Calculation of desired values of the power factor on the basis of at least electrical data of the asynchronous machine;
      bb. Determination of actual values of the power factor (cos $\varphi_{ist}$) with the participation of physical data comprising the predetermined or impressed voltage vector ($U_S$) and a current vector ($I_S$);
      bc. Determination of differences between the actual values and target values of the power factor (cos $\varphi_{soll}$, cos $\varphi_{ist}$) and control of the power factor with these differences as input variables;
      bd. Calculating output variables of the power factor controller as manipulating (regulating) variables ($U_{Add}$) for the control unit;
      be. Limiting the output values ($U_{Add}$) and adapting the voltage vector ($U_S$) via the regulating variables ($U_{Add}$);

      b. in a loss-optimized operation of the asynchronous machine;
      c. wherein a controller amplification of the controller for the power factor is adapted in dependence on the setpoint or actual speed or in dependence on the rotating field frequency, or the control difference of the controller for the power factor is limited to a maximum value in positive and/or negative direction;
      d. wherein the control of the power factor is used for the adaptation of the motor voltage, which determines the setpoint value of the control, which is dependent on the speed or rotational field frequency, in a copper loss-optimal manner and deterministically only from the electrical data of the asynchronous machine;
      e. whereby a positive limitation of the regulating variables ($U_{Add}$) at the controller output is adapted in dependence on the current output frequency.

2. Method according to claim 1, carried out with or without rotational speed feedback.

3. Method according to claim 1 or 2, wherein the output of the controller of the power factor is limited in dependence on the set or actual speed or in dependence on the rotating field frequency.

4. Method according to any one of claims 1 to 3, whereby in a regenerative operation the control or regulation of the power factor is different from that of motor operation.

5. Method according to claim 1, wherein the control device is an inverter or a servo-inverter.

6. Method according to claim 1, wherein the influencing of the asynchronous machine is an open-loop or closed-loop control.

7. Method according to one of the previous claims, where the electrical data of the asynchronous machine is nameplate data and/or equivalent circuit diagram data.

**Revendications**

1. **Procédé pour influencer** une machine asynchrone, la machine asynchrone étant influencée par un dispositif de commande, comprenant les étapes suivantes

   a. Préréglage ou impression d'un vecteur de tension ($U_S$) pour la machine tournant à une fréquence de champ tournant ($f_{Modulator}$), tant la fréquence de champ tournant que le vecteur de tension ayant été déterminés par une commande ou une régulation basée sur une caractéristique tension-fréquence afin de suivre le vecteur de tension ($\underline{U}_S$) pendant le fonctionnement au moyen d'une commande de facteur de puissance comme commande cos φ avec un régulateur de facteur de puissance, **caractérisé par**

ba. Calcul des valeurs souhaitées du facteur de puissance sur la base au moins des données électriques de la machine asynchrone ;

bb. Détermination des valeurs réelles du facteur de puissance (cos $\varphi_{ist}$) avec la participation de données physiques comprenant le vecteur de tension ($\underline{U}_S$) prédéterminé ou imposé et un vecteur de courant ($\underline{I}_S$);

bc. Détermination des différences entre les valeurs réelles et les valeurs cibles du facteur de puissance (cos $\varphi_{soll}$, cos $\varphi_{ist}$) et contrôle du facteur de puissance avec ces différences comme variables d'entrée ;

bd. Calcul des variables de sortie du contrôleur de facteur de puissance en tant que variables manipulées ($U_{Add}$) pour l'unité de commande ;

be. Limiter les valeurs de sortie ($U_{Add}$) et adapter le vecteur de tension ($\underline{U}_S$) via les valeurs de sortie ($U_{Add}$) ;

b. dans un fonctionnement à perte optimisé de la machine asynchrone ;

c. dans lequel un gain de régulation du régulateur pour le facteur de puissance est adapté en fonction de la consigne ou de la vitesse réelle ou en fonction de la fréquence du champ tournant, ou la différence de régulation du régulateur pour le facteur de puissance est limitée à une valeur maximale en sens positif et/ou négatif ;

d. dans lequel la régulation du facteur de puissance sert à adapter la tension du moteur, qui détermine la valeur de consigne de la régulation, qui dépend de la vitesse ou de la fréquence du champ tournant, de manière déterministe et optimale du point de vue des pertes de cuivre, uniquement à partir des données électriques de la machine asynchrone ;

e. par lequel une limitation positive des valeurs manipulées ($U_{Add}$) à la sortie du contrôleur est adaptée en fonction de la fréquence de sortie actuelle.

2. Procédé selon la revendication 1, selon laquelle le travail est effectué avec ou sans retour de vitesse.

3. Procédé selon la revendication 1 ou 2, dans laquelle la sortie du régulateur du facteur de puissance est limitée en fonction de la vitesse de rotation de consigne ou réelle ou en fonction de la fréquence du champ tournant.

4. Procédé selon l'une des revendications 1 à 3, selon laquelle, dans le cas d'un fonctionnement régénératif, le contrôle ou la régulation du facteur de puissance est différent de celui du fonctionnement du moteur.

5. Procédé selon la revendication 1, dans lequel le dispositif de commande est un onduleur ou un servo-onduleur.

6. Procédé selon la revendication 1, dans laquelle l'influence de la machine asynchrone est une commande en boucle ouverte ou fermée.

7. Procédé selon l'une des revendications précédentes, où les données électriques de la machine asynchrone sont les données de la plaque signalétique et/ou les données équivalentes du schéma de circuit

**Fig. 1**

**Fig. 2**

**Fig. 3**

$U_s$

PWM -Signale

Pulsbildungssatz

$U_{Modulator}$

U/f Kennlinie

$f_{Modulator}$

Schlupf-Kompen-sation

$f_{Soll}$

$U_{Add}$

adapt. Regleranpassung und Stellwertbegrenzung

$\cos \varphi$ - Regler

$f_{Modulator}$

$\cos \varphi_{Soll}$

$\cos \varphi = f(f_{Modulator})$

$\cos \varphi_{Ist}$

$\cos$

$\Delta\varphi$

Differenzwinkel - berechnung

$U_s$

$I_s$

wirkungsgrad-optimierende $\cos \varphi$ Regelung

# Fig. 4

Vergleich der Wirkungsgrade bei 20% $n_N$

Vergleich der Wirkungsgrade bei 40% $n_N$

Vergleich der Wirkungsgrade bei 50% $n_N$

EP 2 619 900 B1

Fig. 5

Ausgangsfrequenz [Hz]

**EP 2 619 900 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 330477 A2
- EP 556013 B1
- US 5442271 A
- US 5500581 A
- DE 19615095 C1
- WO 198706403 A1

**In der Beschreibung aufgeführte Nicht-Patentliteratur**

- **QUANG ; DITTRICH.** Praxis der feldorientierten Drehstromantriebsregelungen. Expert Verlag, 1999
- **KIRSCHEN ; NOVOTNY ; LIPO.** On-Line Efficiency Optimization of a Variable Motor Drive. *IEEE Trans. Industry Appl.,* Mai 1985, vol. 21 (4), 610-615
- Energy Optimal Control of Induction Motor Drives. **ABRAHAMSEN.** Institute of Energy Technology. Alborg University, Februar 2000
- **CHANG ; KIM.** Minimum-Time Minimum-Loss Speed Control of Induction Motors under Field-Oriented Control. *IEEE Trans. Industrial Electronics,* 1997, vol. 44 (6), 809-815